**Europäisches Patentamt**

**European Patent Office**

**Office européen des brevets**

(11) Publication number: **0 060 715**
**B1**

(12) **EUROPEAN PATENT SPECIFICATION**

(45) Date of publication of patent specification: **05.11.86**

(51) Int. Cl.⁴: **F 16 L 55/16, E 21 D 11/10**

(21) Application number: **82301329.7**

(22) Date of filing: **16.03.82**

(54) **Pipe sealing apparatus and jack.**

(30) Priority: **18.03.81 US 245003**

(43) Date of publication of application:
**22.09.82 Bulletin 82/38**

(45) Publication of the grant of the patent:
**05.11.86 Bulletin 86/45**

(84) Designated Contracting States:
**BE DE FR GB IT NL SE**

(56) References cited:
**DE-A-2 423 953**
**DE-B-1 064 710**
**DE-B-2 101 854**
**US-A-2 013 457**
**US-A-2 486 801**
**US-A-2 780 292**
**US-A-3 267 967**

(73) Proprietor: **Maimets, Lembit**
**39 Rivercourt Boulevard**
**Toronto Ontario, M4J 3A3 (CA)**

(72) Inventor: **Maimets, Lembit**
**39 Rivercourt Boulevard**
**Toronto Ontario, M4J 3A3 (CA)**

(74) Representative: **Hallam, Arnold Vincent et al**
**E.N. LEWIS & TAYLOR 144 New Walk**
**Leicester LE1 7JA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to sealing apparatus for use in repairing sewer pipes and the like, preferably in combination with a hydraulically operated jack for use in operating the sealing apparatus during pipe repair. The jack disclosed is also useful generally for erecting collapsible tunnel liner sections constructed in a plurality of arcuate segments which define rigid shell-like cylindrical liners when erect.

Segmented, closed loop tunnel or pipeliners are known, and reference is made to my U.S. patent No. 4,124,985 which discloses such a tunnel liner. These tunnel liners comprise a plurality of arcuate segments which are hingedly connected to define a closed loop which in collapsed state is small enough in cross-section to be transported through previously erected tunnel liner sections to a location where an additional tunnel liner section is to be erected. Once at the desired location, the tunnel liner section is expanded to define a rigid cylindrical structure. In the device of my U.S. patent, the tunnel liner section is moved from a collapsed state to an intermediate state in which the arcuate segments define a cylindrical structure having an inner diameter greater than the ultimate desired diameter for the erected tunnel liner section, and in this oversized condition the arcuate segments are positioned to self-lock when released, to assume the final erect state.

My U.S. patent No. 4,124,985 also discloses a method of erecting a collapsible tunnel liner section. The method involves placing deflated air bags in the stack formed by the collapsed loop of tunnel liner segments, and then inflating the bags to expand the loop outwardly to the oversized condition. The air bags are then deflated (leaving the tunnel liner section in the fully erect state), and moved for use in the next section to be assembled. A disadvantage associated with the use of air bags is that considerable care and time must be taken to ensure that they are properly placed in the cavity defined by the collapsed tunnel liner and functioning properly.

US—A—3267967 describes a tool for repairing leaks in underground pipes in which a cylinder formed of arcuate overlapping segments is located in the pipe adjacent the leak and then radially expanded by a central hydraulic cylinder. The segmented cylinder carries external O-ring seals, one at each end, which are compressed against the inner wall surface of the pipe when the latter is expanded to seal an annular space between the pipe wall and the segmented cylinder. Settable repair material is then pumped into the space through a pipe fitting in one of the segments and once this is set the cylinder is collapsed and the tool removed.

Another method used to erect tunnel liners involves placing a vertically oriented hydraulic cylinder in the cavity defined by the collapsed tunnel liner sections at both ends thereof. The cylinders are then used to expand the loop vertically thereby increasing the size of the interior cavity and allowing workmen access to the inner surface of the loop. The workmen then press out the side segments of the tunnel liner section with jacks to complete the erection. This method has proven somewhat dangerous because of the instability of the tunnel liner section and its oversized condition and because of the lack of effective bracing of the cylinders.

The present invention seeks to provide apparatus for sealing a damaged pipe, which apparatus is preferably used in combination with a hydraulically-powered jack.

Accordingly, the present invention provides sealing apparatus for use in sealing damaged pipes, comprising:

a collapsible pipe liner constructed in a plurality of arcuate segments hingedly connected so that the segments define a closed loop which can be moved from a collapsed state in which the loop can be located in a damaged pipe to an erect state in which the loop defines a rigid, erected pipe liner of generally cylindrical shape with a generally cylindrical outer surface;

whereby, when the collapsible pipe liner

is located within a damaged pipe portion in the collapsed state and then moved into the erect state, a sealing material between the cylindrical outer surface of the erected pipe liner and a damaged inner surface of the damaged pipe portion covers the damaged inner surface and seals the damaged pipe portion

characterised in that the sealing material comprises compressible sealing material which is secured to the segments so that when the loop is moved into the erect stage the sealing material covers at least that portion of the cylindrical outer surface corresponding to the damaged inner surface of the damaged pipe portion.

A preferred embodiment of the invention provides a combination of the sealing apparatus of the invention with a jack, wherein the arcuate segments of the collapsible pipe liner in their collapsed state define a stack with an open space for receiving the jack, and are movable to the erect state, at least in part by displacing a first loop portion relative to a second loop portion through a first predetermined distance along the first axis (for example, the displacement of top and bottom segments of a loop along a vertical axis), and then displacing a third loop portion relative to a fourth loop portion through a second predetermined distance along a second axis perpendicular to the first axis (and continuing the example, by displacing oppositely-disposed loop side segments horizontally).

The jack comprises a carrier which can be physically disposed in the cavity defined by a collapsed liner, and first, second, and third pushing elements. A first hydraulic cylinder secured to the carrier can be activated to advance the first pushing element in a first direction (typically vertically). A second hydraulic cylinder secured to the carrier can be activated to advance the second pushing element in a second direction perpendicular to the first direction (typically horizontal). A third hydraulic cylinder secured to the carrier can be activated to advance the third pushing element in a third direction, opposite to the second direction. When the carrier is disposed in the cavity of a collapsed liner section, the direction of motion of the pushing elements can be oriented coincident with the axes along which the tunnel liner loop portions must be advanced to move the tunnel liner into an erect state, and the hydraulic cylinders activated to displace the first and second loop portions mentioned above to the first predetermined distance then to advance the third and fourth loop portions through the second predetermined distance. In the context of a collapsible liner section as described in my U.S. patent No. 4,124,985 the jack can be used first to expand a liner vertically and then horizontally until an oversized condition is achieved, and thereafter the jack can be disengaged to permit the tunnel liner segments to lock into an erect structure.

The invention is further described hereinafter, by way of example, with reference to the accompanying drawings, in which:

Fig. 1 is a side perspective view of a jack, in partially contracted condition;

Figs. 2—3 are cross-sectional views along the line 2—2 illustrating a turning mechanism (oriented in two distinct states) used to rotate certain hydraulic cylinders of the carrier between operative and inoperative positions;

Fig. 4 is a front perspective view of pipe sealing apparatus comprising a segmented pipeliner, partially erected with the jack of Fig. 1;

Fig. 5 is a front perspective view of the sealing apparatus fully erected; and,

Figs. 6—8 are side perspective views illustrating alternative embodiments of a jack.

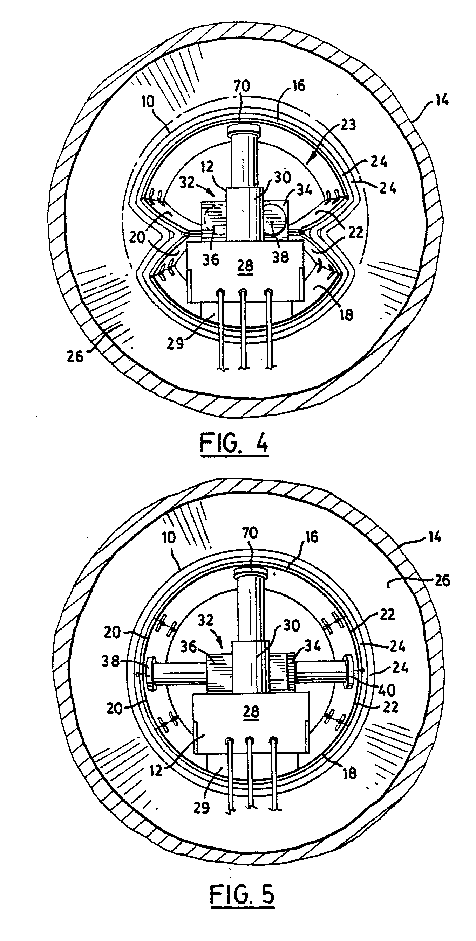

Reference is made to Fig. 4 which illustrated sealing apparatus 10 being erected with a hydraulically operated jack 12 to seal damaged inner surfaces of a large pipe 14. The sealing apparatus 10 comprises a closed loop pipe liner defined by a number of arcuate pipe liner segments, namely, a top segment 16, a bottom segment 18, a first pair of side segments 20 and an oppositely disposed pair of side segments 22. The segments can be constructed of steel, concrete, PVC plastic or any other suitable material.

The segments are shown in Fig. 4 in a collapsed state in which they effectively define a closed loop stack with an opening 24 in which the jack 12 is received. In Fig. 5 the segments have been erected using the jack 12 to define a rigid tunnel liner section of generally cylindrical shape.

Two sheets of foamed urethane are adhesively secured to the segments. When the segments are erected into a rigid pipeliner, as illustrated in Fig. 5, the sealing material 24 is compressed between the generally cylindrical outer surface (not specifically indicated) of the erected segments and the damaged inner surface 26 of the pipe 14. The pipeliner and the sealing sheets 25 must of course be dimensioned appropriately. In particular, if a pipe or tunnel liner as illustrated in my U.S. patent No. 4,124,985 is adapted for use, one must ensure that the outer diameter of the pipeliner in its oversized condition does not exceed the liner diameter of the pipe 14 being repaired. It will also be appreciated that the sheets of sealing material 25 will have to compress sufficiently to accommodate the structure of the segments in the oversized condition.

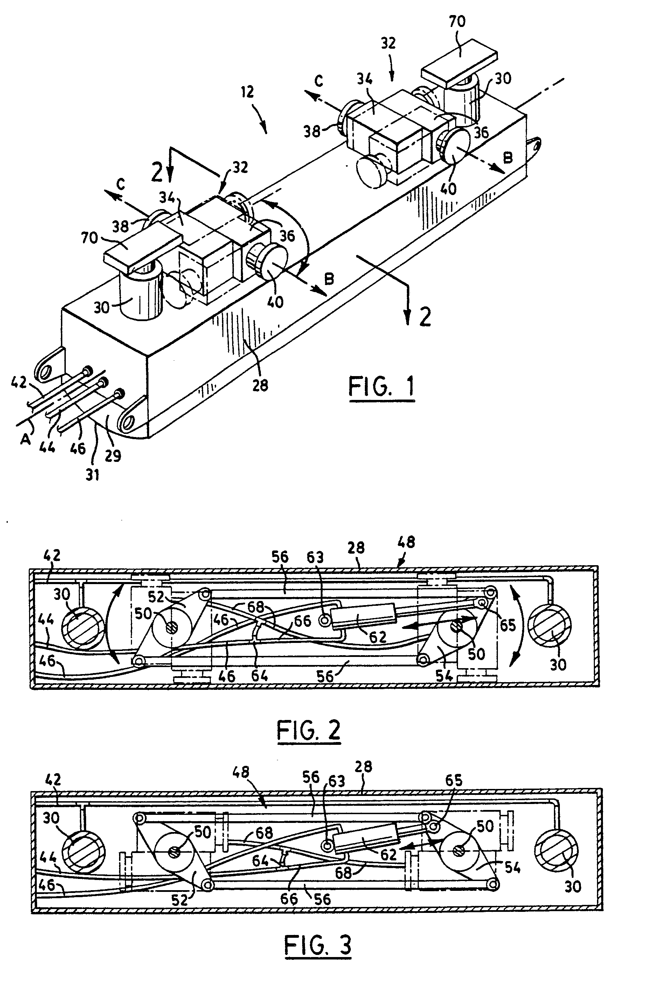

The jack 12 is better illustrated in the views of Figs. 1—3 where it can be seen to comprise a hollow steel carrier 28 with a base 29 having a rounded bottom 31 conforming in curvature to the bottom segment 18 of the sealing apparatus 10, two vertically oriented hydraulic cylinders 30, and two horizontally oriented hydraulic cylinder assemblies 32. Each of the cylinder assemblies 32 comprises a pair of horizontally oriented hydraulic cylinders 34, 36 which are rigidly secured to one another and aligned to advance metal push pads 38, 40 in opposite directions when hydraulically activated. The hydraulic cylinders 30, 34, 36 are of a conventional type that is spring-biased to retract its piston when application of hydraulic fluid is discontinued so that once a pipeliner is erected with the jack 12 a drop in pressure in hydraulic feed liners causes the cylinder pistons and consequently the pushing elements to retract automatically from the erect pipeliner.

The jack 12 is preferably compact to fit easily into the open space within a collapsed loop of pipeliner segments. In pipeliners such as that of the sealing apparatus 10, the segments when collapsed define an opening whose vertical extent is greater than its horizontal extent. The jack 12 has consequently been constructed so that its overall horizontal width can be reduced by rotating the assemblies 32 between inoperative positions (illustrated in ghost outline in Fig. 1) in which the hydraulic cylinders 34, 36 are effectively retracted and operative positions (illustrated in Fig. 1 in solid lines). In the inoperative positions the cylinders 38, 40 are disposed substantially parallel to the longitudinal axis A of the carrier 28, substantially perpendicular to the directions in which the cylinders 38, 40 normally act when in the operative positions.

The carrier 28 houses a rotation assembly 48 (illustrated in the views of Figs. 2—3) which serves to rotate the cylinder assemblies 32 between the operative and inoperative positions. Each of the cylinders assemblies 32 is mounted on a vertical shaft 50, rotatably secured to the carrier 28. Winged collars 52, 54 are secured one to each shaft 50, and used in rotating the shafts 50. Two substantially identical connecting arms 56 are pivotally connected to the collars 52, 54 as illustrated to ensure that the cylinder assemblies 32 rotate in unison and by the same amount. A hydraulic cylinder 62 with an end 64 pivotally secured to the carrier 28 and a piston end 66 pivotally secured to the wing collar 54 can be hydraulically activated to rotate the cylinder assemblies 32 between the operative and inoperative positions, the operative position being achieved by full extension of the cylinder 62, and the inoperative position being achieved by full contraction of the cylinder 62. (Metal stops can be used instead to engage the winged collars 52, 54 to limit rotation, but would have to be constructed to withstand very significant forces and are not preferred). The various hydraulic cylinders of the jack 12 are operated from hydraulic feed lines 42, 44, 46. The vertical cylinders 30 are simultaneously operated from the line 42, and the horizontal cylinders 34, 36 from the line 44. The cylinder 62 is expanded by hydraulic pressure in the line 42 (and its expansion is closely tied to that of the horizontal cylinders 24, 26), and contracted by pressure applied to the line 46.

A valve 64 directs hydraulic fluid in the line 44 between the horizontal cylinders 34, 36 and the cylinder 62 so that expansion of the horizontal cylinders 34, 36 does not begin until the horizontal cylinders assemblies 32 are first rotated to their operative positions. The valve 64 has a first internal pathway which continuously directs hydraulic fluid to and from the cylinder 62 whereby the cylinder 62 always expands (to the extent otherwise possible) when pressure is applied to the line 44. The valve 64 has a second internal pathway with a spring-biased check valve that freely permits the flow of hydraulic fluid from the horizontal cylinders 34, 36 but only permits flows into the cylinders 34, 36 when a predetermined pressure is achieved in the valve 64. Thus, when hydraulic fluid is applied to line 44 the hydraulic cylinder 62 alone expands, until fully extended and a build-up of back pressure occurs in the fluid line 66. When the back pressure exceeds the predetermined level needed to open the internal check valve, the hydraulic cylinders 34, 36 are then expanded. When pressure is no longer applied to the line 44 the cylinders 34, 36 retract under their spring bias, and the cylinders assemblies 32 can then be rotated to their inoperative positions by applying hydraulic pressure to the line 46, contracting the cylinder 62. A suitable valve for such purposes is the Enerpac (Trade Mark) V161, of Enerpac Butler, a division of Applied Power Inc., of Winconsin, U.S.A.

To repair a pipe the sealing apparatus 10 is transported in its collapsed state to the location in the pipe where the fault has occurred, and oriented for expansion into the erect state. The jack 12 is then disposed in the opening 24 with th base 31 of the carrier 28 resting against the bottom segment 18 of the sealing apparatus 10. The bottom surface of the base 21 is shaped to conform substantially to that of the bottom to improve the bracing of the carrier 28 against the segments. The vertically oriented hydraulic cylinders 30 are then activated to advance pushing pad 70 towards the upper segment 16 of the sealing apparatus 10. The upper segment 16 is advanced vertically until the sheets of sealing material 25 are compressed against the damaged pipe portions 26. With the incident horizontal expansion of the space 24 the hydraulic assemblies 32 can then be positioned to press out the side segments 20, 22. The cylinders assemblies 32 are rotated to the operative positions illustrated in solid lines in Fig. 1, and the cylinders 34, are then activated to move pushing elements 38 in a direction C and the cylinders 36 simultaneously activated to move the pushing elements 36 in an opposite direction B, (the directions B and C being substantially perpendicular to the axis A of the carrier 28). The pushing elements 38, 40 engage the side segments 20, 22 respectively, and advance the side segments 20, 22 towards the position illustrated in Fig. 5, and into the oversized condition of the sealing apparatus 10. The hydraulic pressure applied to the cylinders 30, 34 is then released, permitting the cylinders to then retract under their spring bias, and simultaneously permitting the sealing apparatus 10 to assume its erect state. Because the foamed urethane sealing material is compressed against the damaged inner surface 26 of the pipe 14, the surface 26 is sealed. The cylinder assemblies 32 are then returned to the inoperative position so that the jack 12 can be used elsewhere on the pipe 14 or returned to storage.

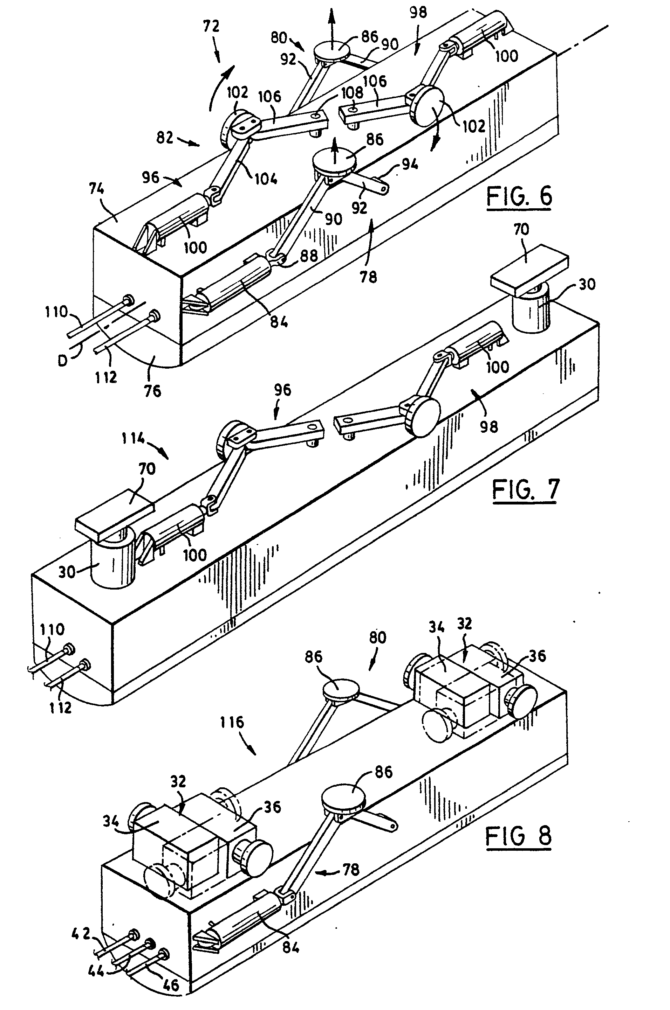

In small pipes the length of a conventional hydraulic cylinder may well exceed the clearance between upper and lower pipe liner segments in their collapsed state. The carrier 12 with its vertically oriented hydraulic cylinders 30 cannot be used under such circumstances. A jack 72 which can be appropriately dimensioned for such application is illustrated in the view of Fig. 6.

The jack 72 comprises an elongate carrier 74 having a longitudinal axis D and a rounded base 76 adapted to be rested in a collapsed pipe or tunnel liner. Two substantially identical vertical pushing assemblies 78, 80 are secured to the carrier 74 as illustrated. A horizontal assembly 82 is mounted to the top of the carrier 74.

The vertical pushing assembly 78 comprises a hydraulic cylinder 84 rigidly secured to the carrier 74 and aligned substantially parallel to the axis D, a metal pushing pad 86 and various mechanical linkage means for transforming movement of the piston 84 in a direction parallel to the axis D into a substantially vertical movement of the pushing pad 86. The piston 84 is of the type described above which is spring-biased to return to a contracted state when no longer hydraulically actuated.

The linkage means include a yoke 88 secured to the piston of the cylinder 84, a first pivot arm 90 pivotally mounted at one end in the yoke 88 and pivotally connected at another end to the pushing element 86, and a second pivot arm 92 pivotally connected at one end to the pushing element 86 and pivotally connected at another end to the connector 74 by means of a pivot pin 94. The motion of the pushing pad 86 under the influence of the cylinder 84 is not a pure displacement in a vertical direction, but involves rotation of pushing element 86 about the pivot pin 94. As the vertical pushing assembly 78, 80 is substantially identical, the visible components of the assembly 80 have been labelled with corresponding reference numerals but the assembly 80 will not be described.

The horizontal pushing assembly 82 is constructed as two distinct pushing assemblies 96, 98. Each of the pushing assemblies 96, 98 comprises a hydraulic cylinder 100 which lies substantially parallel to the axis D, a pushing pad 102, and linkage means comprising first and second pivot pin 108. The pushing assemblies 96, 98 are analogous in structure and function to the pushing assemblies 78, 80, and motion of the pistons of the cylinders 100 in the general direction of the axis D is transformed at least in part into motion of the pushing elements 102, horizontally but in opposite directions.

The two pivot arms 106 and two pivot pins 108 can be replaced by a single pivot arm extending continuously between the pads 102, and pivotally connected to the carrier 74 by a single pivot pin centrally located in the pivot arm. In practice, use of a single pivot arm has been found to necessitate lateral bracing of the carrier 74 where unequal forces are brought to bear on each of the pads 102. This problem is substantially obviated where the cylinders 100 are substantially identical, separate pivot arms 106 and pivot pins 108 are used, and the cylinders 100 are actuated from a single hydraulic fluid line.

The jack 72 is used in substantially the same manner as the jack 12 described above. However, only two hydraulic fluid lines 110, 112 are required. The fluid line 110 provides hydraulic fluid simultaneously to each of the vertical pushing assemblies 78, 80 and the line 112 provides hydraulic fluid simultaneously to each of the hydraulic cylinders 100. It will be appreciated that the carrier 74 can be dimensioned to be smaller than illustrated, and could in fact be a thick metal plate with the hydraulic fluid lines 110, 112 secured to the exterior plate.

Figs. 7 and 8 illustrate alternative embodiments 114, 116 of hydraulically operated jacks adapted for use in the sealing apparatus of the invention. The jacks 114, 116 involve a combination of features already discussed in detail with respect to the jacks 12 and 72 and consequently will not be discussed in detail. Instead, features identical to those described have been labelled with like reference numerals.

Very briefly, the jack 114 comprises vertically oriented hydraulic cylinders 30 surmounted with pushing pads 70. To the top of the carrier illustrated are secured the horizontal pushing assemblies 96, 98. As the cylinders 30, and 100 are of the type which are spring-biased to retract when not subject to hydraulic fluid pressure, only two fluid lines 110, 112 are required to operate the cylinders 30, 100, the line 110 providing hydraulic fluid simultaneously to the vertical cylinders 30, and the line 112 providing hydraulic fluid simultaneously to the hydraulic cylinders 100.

The jack 116 is provided with the vertical pushing assemblies 78, 80 described above which transforms longitudinal motion of the hydraulic cylinders 84 into vertical displace- of pushing pads 86. The jack 116 is also provided with the rotating cylinder assemblies 32 of jack 12 for use in horizontally expanding closed loop tunnel or pipeliners. The vertical pushing assemblies 78, 80 are operated from a single hydraulic fluid line 42, while the cylinder assemblies 32 are operated from two lines, 44, 46. The line 44 serves both to rotate the cylinder assemblies 32 from the inoperative to the operative positions and to advance the pistons of the cylinders 34, 36 horizontally. The line 46 serves to restore the cylinder assemblies 32 to the inoperative position in the manner described above.

The various jacks 12, 72, 114, 116 have been described with reference to the sealing apparatus 10. However, it is contemplated that the jacks can be used generally in the erection of segmented, closed loop tunnel or pipeliners which can be assembled by displacing top and bottom loop segments along a vertical axis, and then by displacing oppositely-disposed side segments along a horizontal axis. Although horizontal and vertical axes have been relied upon throughout to illustrate the relative orientation of the hydraulic cylinders of the various jacks, it will be appreciated that the jacks described can be used to erect vertically inclined tunnel or pipeliners which can be erected by displacing oppositely-disposed loop portions along mutually perpendicular axes.

### Claims

1. Sealing apparatus for use in sealing damaged pipes, comprising:

a collapsible pipe liner (16, 18, 20, 22) constructed in a plurality of arcuate segments hingedly connected so that the segments define a closed loop which can be moved from a collapsed state in which the loop can be located in a damaged pipe to an erect state in which the loop defines a rigid, erected pipe liner of generally cylindrical shape with a generally cylindrical outer surface;

whereby, when the collapsible pipe liner (16, 18, 20, 22) is located within a damaged pipe portion in the collapsed state and then moved into the erect state, a sealing material (24) between the cylindrical outer surface of the erected pipe liner and a damaged inner surface (26) of the damaged pipe portion (14) covers the damaged inner surface and seals the damaged pipe portion

characterised in that the sealing material comprises compressible sealing material (24) which is secured to the segments so that when the loop is moved into the erect state the sealing material covers at least that portion of the cylindrical outer surface corresponding to the damaged inner surface of the damaged pipe portion.

2. Sealing apparatus as claimed in claim 1 in which the sealing material (24) defines a substantially cylindrical shell covering the cylindrical outer surface of the erected pipe liner (16, 18, 20, 22).

3. Sealing apparatus as claimed in claim 1 in combination with a jack for use in erecting the liner, wherein:

the arcuate segments (16, 18, 20, 22) of the collapsible pipe liner in their collapsed state define a stack with an open space for receiving the jack (12), and are movable to said erect state at least in part by movements comprising displacing a first loop portion (16) relative to a second loop porttion (18) through a first predetermined distance along a first axis and then displacing a third loop portion (20) relative to a fourth loop portion (22) through a second predetermined distance along a second axis perpendicular to the first axis; and wherein

the jack comprises: a carrier (28) located in the open space in the stack against the second loop portion;

first hydraulically-operated jack means (30) for use is displacing the first loop portion (16) relative to the second loop portion (18) by the first predetermined distance, including a first hydraulic cylinder (30) secured to the carrier and a first pushing element (70) coupled to the piston of the first hydraulic cylinder so that the first pushing element (70) can be advanced by the first hydraulic cylinder (30) to displace the first loop portion (16) along the first axis; and

second hydraulically-operated jack means (32) for use in displacing the third loop portion (20) relative to the fourth loop portion (22) by the second predetermined distance, including a second hydraulic cylinder (34) secured to the carrier and a second pushing element (38) coupled to the piston of the second hydraulic cylinder so that the second pushing element (38) can be advanced by the second hydraulic cylinder (34) to displace the third loop portion (20) in a first direction, along the second axis and including a third hydraulic cylinder (36) secured to the carrier (28) and a third pushing element (40) coupled to the piston of the third hydraulic cylinder (36) so that the third pushing element (40) can be advanced by the third hydraulic cylinder (36) to displace the fourth loop portion (22) along the second axis in a second direction opposite to the first direction along the second axis.

4. A sealing apparatus as claimed in claim 3 wherein:

the second and third hydraulic cylinders (34, 36) are rotatably secured to the carrier (28), and rotatable between inoperative positions in which the second and third cylinders (34, 36) are transversely disposed relative to each of the first and second axes and operative positions in which the second and third hydraulic cylinders (34, 36) are directed generally in the first and second directions so that the pistons of the second and third hydraulic cylinders move in the first and second directions when hydraulically activated; and,

the second jack means (32) include means (48) attached to the carrier (28) for selectively rotating the second and third cylinders (34, 36) between the operative and inoperative positions.

5. A sealing apparatus as claimed in claim 3 or 4 wherein:

the first hydraulic cylinder (84) is rigidly secured to the carrier (74) and positioned so that the piston of the first cylinder (84) advances when hydraulically activated along a third axis substantially perpendicular to the first and second axes; and,

the first jack means (78, 80) includes linkage means coupling the first pushing element (86) to the piston of the first hydraulic cylinder (84) for transforming movement of the piston of the first cylinder along the third axis into movement of the first pushing element (86) parallel to the first axis.

6. A sealing apparatus as claimed in claim 3 or claim 5 when appendant to claim 3, wherein:

the second and third hydraulic cylinders (100) are rigidly secured to the carrier (74) so that the pistons of the second and third hydraulic cylinders (100) move when hydraulically actuated perpendicular to the first and second axis; and,

the second jack means (82) include linkage means for coupling the pistons of the second and third hydraulic cylinders (100) to the second and third pushing elements (102) for transforming movement of the piston of the second hydraulic cylinder (100) perpendicular to the first and second axes into movement of the second pushing element (102) parallel to the second axis and for transforming movement of the piston of the third hydraulic cylinder (100) perpendicular to the first and second axes into movement of the third pushing element (102) parallel to the second axis.

## Revendications

1. Appareil d'étanchement, utilisable pour étancher des tuyaux endommagés; comprenant:

un manchon pliable (16, 18, 20, 22), construit avec une pluralité de segments arqués reliés par articulation de façon que les segments définissent une boucle fermée qui peut être amenée d'un état plié dans lequel la boucle peut être placée dans un tuyau endommagé, à un état déployé dans lequel la boucle définit un manchon déployé et rigide ayant une forme générale cylindrique, avec une surface extérieure générale cylindrique;

grâce à quoi, lorsque le manchon pliable (16, 18, 20, 22) est placé à l'intérieur d'une partie de tuyau endommagée à l'état plié, puis amené à l'état déployé, un matériau d'étanchéité (24) entre la surface extérieure cylindrique du manchon déployée et une surface intérieure endommagée (26) de la partie endommagée du tuyau (14) recouvre la surface intérieure endommagée et ferme de façon étanche la partie de tuyau endommagée,

caractérisé en ce que le matériau d'étanchéité comprend un matériau de jointoiement compressible (24) fixé aux segments, de sorte que, lorsque la boucle est amenée à l'état déployé, le matériau de jointoiement couvre au moins la partie de la surface extérieure cylindrique correspondant à la surface intérieure endommagée de la partie de tuyau endommagée.

2. Appareil d'étanchement selon la revendication 1, dans lequel le matériau d'étanchéité (24) définit une enveloppe sensiblement cylindrique couvrant la surface extérieure cylindrique du manchon déployé (16, 18, 20, 22).

3. Appareil d'étanchement selon la revendication 1, en combinaison avec un vérin utilisable pour installer le manchon, dans lequel:

les segments arqués (16, 18, 20, 22) du manchon pliable dans leur état plié définissent un empilement comportant un espace ouvert pour loger le vérin (12) et sont déplaçables pour venir dans ledit état déployé, au moins en partie par des mouvements comprenant le déplacement d'une première partie de boucle (16) par rapport à une deuxième partie de boucle (18) sur une première distance prédéterminée suivant un premier axe, puis le déplacement d'une troisième partie de boucle (20) par rapport à une quatrième partie de boucle (22) sur une deuxième distance prédéterminée suivant un deuxième axe perpendiculaire au premier axe; et dans lequel:

le vérin comprend: un support (28) situé dans l'espace ouvert de l'empilement contre la deuxième partie de boucle; des premiers moyens à vérin actionné hydrauliquement (30), destinés à déplacer la première partie de boucle (16) par rapport à la deuxième partie de boucle (18) sur la première distance prédéterminée, comportant un premier cylindre hydraulique (30) fixé au support et un premier élément de poussée (70) accouplé au piston du premier cylindre hydraulique, de sorte que le premier élément de poussée (70) peut être avancé par le premier cylindre hydraulique (30) pour déplacer la première partie de boucle (16) suivant le premier axe; et

des deuxièmes moyens à vérin actionné hydrauliquement (32), destinés à déplacer la troisième partie de boucle (20) par rapport à la quatrième partie de boucle (22) sur la deuxième distance prédéterminée, comportant un deuxième cylindre hydraulique (34) fixé au support et un deuxième élément de poussée (38) accouplé au piston du deuxième cylindre hydraulique, de sorte que le deuxième élément de poussée (38) peut être avancé par le deuxième cylindre hydraulique (34) pour déplacer la troisième partie de boucle (20) dans un premier sens suivant le deuxième axe, et comportant un troisième cylindre hydraulique (36) fixé au support (28) et un troisième élément de poussée (40) accouplé au piston du troisième cylindre hydraulique (36), de sorte que le troisième élément de poussée (40) peut être avancé par le troisième cylindre hydraulique (36) pour déplacer la quatrième partie de boucle (22) suivant le deuxième axe dans un deuxième sens opposé au premier sens suivant le deuxième axe.

4. Appareil d'étanchement selon la revendication 3, dans lequel:

les deuxième et troisième cylindres hydrauliques (34, 36) sont fixés au support (28) avec possibilité de rotation, et peuvent tourner entre des positions de repos, dans lesquels les deuxième et troisième cylindres (34, 36) sont disposés transversalement par rapport à chacun des premier et deuxième axes, et des positions de travail dans lesquelles les deuxième et troisième cylindres hydrauliques (34, 36) sont orientés de façon générale suivant les premier et deuxième sens, de sorte que les pistons des deuxième et troisième cylindres hydrauliques se déplacent suivant les premier et deuxième sens lorsqu'ils sont actionnés hydrauliquement; et

les deuxièmes moyens à vérin (32) comportent des moyens (48) attachés au support (28) pour faire tourner sélectivement les deuxième et troisième cylindres (34, 36) entre les positions de travail et de repos.

5. Appareil d'étanchement selon la revendication 3 ou 4, dans lequel:

le premier cylindre hydraulique (84) est fixé rigidement au support (74) et positionné de façon que le piston du premier cylindre (84) s'avance, quand il est actionné hydrauliquement, suivant un troisième axe sensiblement perpendiculaire au premier et au deuxième axes; et les premiers moyens à vérin (78, 80) incluent des moyens de liaison reliant le premier élément de poussée (86) au piston du premier cylindre hydraulique (84) pour transformer le mouvement du piston du premier cylindre suivant le troisième axe en un mouvement du premier élément de poussée (86) parallèlement au premier axe.

6. Appareil d'étanchement selon la revendication 3, ou selon la revendication 5 lorsqu'elle dépend de la revendication 3, dans lequel:

les deuxième et troisième cylindres hydrauliques (100) sont rigidement fixés au support (74), de sorte que les pistons des deuxième et troisième cylindres hydrauliques (100) se déplacent, lorsqu'ils sont actionnés hydrauliquement, perpendiculairement aux premier et deuxième axes; et les deuxièmes moyens à vérin (82) incluent des moyens de liaison pour relier les pistons des deuxième et troisième cylindres hydrauliques (100) aux deuxième et troisième éléments de poussée (102) pour transformer le mouvement du piston du deuxième cylindre hydraulique (100) perpendiculairement au premier axe et au deuxième axe en mouvement du deuxième élément de poussée (102) parallèlement au deuxième axe et pour transformer le mouvement du piston du troisième cylindre hydraulique (100) perpendiculairement aux premier et deuxième axes en mouvement du troisième élément de poussée (102) parallèlement au deuxième axe.

**Patentansprüche**

1. Abdichtapparat für die Verwendung in Rohren, dessen Abdichtung beschädigt ist, mit einer zusammenlegbaren Rohrauskleidung (16, 18, 20, 22) die aus einer Vielzahl von gekrümmten Segmenten gebildet ist, die so aneinandergelenkt sind, dass die Segmente eine geschlossene Schlaufe bilden, die aus einem zusammenlegbaren Zustand, in dem die Schlaufe in das beschädigte Rohr eingebracht werden kann, in einen aufgeweiteten Zustand gebracht werden kann, in dem die Schlaufe eine starre, aufgeweitete Rohrauskleidung von im wesentlichen zylindrischer Form mit einer im wesentlichen zylindrischen Aussenfläche bildet, wodurch, wenn die zusammenlegbare Rohrauskleidung (16, 18, 20, 22) innerhalb eines beschädigten Rohrabschnittes im kolabierten Zustand angeordnet und dann in den aufgeweiteten Zustand gebracht wird, ein Abdichtmaterial (24) zwischen der zylindrischen Aussenfläche der aufgeweitete Rohrauskleidung und einer beschädigten Innenfläche (26) des beschädigten Rohrabschnittes (14) die beschädigte Innenfläche abdeckt und den beschädigten Rohrabschnitt abdichtet, dadurch gekennzeichnet, dass das Abdichtmaterial ein zusammendrückbares Abdichtmaterial (24) ist, welches an den Segmenten so angebracht ist, dass, wenn die Schlaufe in den aufgerichteten Zustand gebracht wird, das Abdichtmaterial zumindest den Bereich der zylindrischen Aussenfläche abdichtet, der der beschädigten Innenfläche des beschädigten Rohrabschnittes entspricht.

2. Abdichtapparat nach Anspruch 1, bei dem das Abdichtmaterial (24) eine im wesentlichen zylindrische Hülle bildet, die die zylindrische Aussenfläche der aufgeweiteten Rohrauskleidung (16, 18, 20, 22) abdeckt.

3. Abdichtapparat nach Anspruch 1 in Kombination mit einer Hebevorrichtung zum Aufrichten der Auskleidung, bei dem die gekrümmten Segmente (16, 18, 20, 22) der zusammenlegbaren Rohrauskleidung in ihrem kolabierten Zustand einen Stapel mit einem offenen Raum zum Aufnehmen der Hebevorrichtung (12) bildet, und dass die gekrümmten Segmente in ihrem aufgeweiteten Zustand zumindest teilweise durch Bewegungen bewegbar sind, die das Verschieben des ersten Schlaufenabschnittes (16) relativ zu einem zweiten Schlaufenabschnitt (18) über einen ersten vorbestimmten Abstand entlang einer ersten Achse und dann das Verschieben eines dritten Schlaufenabschnittes (20) relativ zu einem vierten Schlaufenabschnitt (22) über einen zweiten vorbestimmten Abstand entlang einer senkrecht zur ersten Achse liegenden zweiten Achse umfassen, und bei dem die Hebevorrichtung umfasst: einen Träger (28), der in dem offenen Raum des Stapels am zweiten Schlaufenabschnitt anliegend angeordnet ist; erste hydraulisch betätigte Hebemittel (30) für die Verwendung beim Verschieben des ersten Schlaufenabschnittes (16) relativ zum zweiten Schlaufenabschnitt (18) über den ersten vorbestimmten Abstand, welche Mittel einen am Träger befestigten ersten hydraulischen Zylinder (30) und ein mit dem Kolben des ersten hydraulischen Zylinders gekuppeltes erstes Stosselement (70) umfasst, so dass das erste Stosselement (70) durch den ersten hydraulischen Zylinder (30) vorgeschoben werden kann, um den ersten Schlaufenabschnitt (16) entlang der ersten Achse zu verschieben; und zweite hydraulisch betätigte Hebemittel (32) für die Verwendung beim Verschieben des dritten Schlaufenabschnittes (20) relativ zum vierten Schlaufenabschnitt (22) um den zweiten vorbestimmten Abstand, welche Mittel einen am Träger befestigten zweiten hydraulisch Zylinder (34) und ein zweites Stosselement (38) umfassen, das mit dem Kolben des zweiten hydraulischen Zylinders gekuppelt ist, so dass das zweite Stosselement (38) durch den zweiten hydraulischen Zylinder (34) vorgeschoben werden kann, um den dritten Schlaufenabschnitt (20) in einer ersten Richtung zu verschieben, und zwar entlang der zweiten Achse, und welche Mittel einen dritten am Träger (28) befestigten hydraulischen Zylinder (36) und ein drittes Stosselement (40) umfassen, das mit dem Kolben des dritten hydraulischen Zylinders (36) gekuppelt ist, so dass das dritte Stosselement (40) durch den dritten hydraulischen Zylinder (36) vorgeschoben werden kann, um den vierten Schlaufenabschnitt (22) entlang der zweiten Achse in einer zweiten Richtung zu verschieben, die der ersten Richtung entlang der zweiten Achse entgegengesetzt ist.

4. Abdichtapparat nach Anspruch 3, bei dem der zweite und dritte hydraulische Zylinder (34, 36) drehbar am Träger (28) befestigt und zwischen betriebslosen Positionen drehbar sind, in denen der zweite und dritte Zylinder (34, 36) relativ zu jeder der ersten und zweiten Achse quer angeordnet sind, und zwischen Betriebsstellungen, in denen der zweite und dritte hydraulische Zylinder (34, 36) im wesentlichen in der ersten und zweiten Richtung ausgerichtet sind, so dass die Kolben des zweiten und dritten hydraulischen Zylinders sich in der ersten und zweiten Richtung bewegen, wenn sie hydraulisch betätigt sind, und bei dem die zweiten Hebemittel (32) Mittel (48) umfassen, die für das wahlweise Drehen des zweiten und dritten Zylinders (34, 36) zwischen den Betriebs- und den betriebslosen Stellungen am Träger (28) angebracht sind.

5. Abdichtapparat nach Anspruch 3 oder 4, bei dem der erste hydraulische Zylinder (24) starr am Träger (74) angeordnet und so positioniert ist, dass der Kolben des ersten Zylinders (84) sich bei hydraulischer Betätigung entlang einer dritten Achse vorbewegt, die im wesentlichen senkrecht zur ersten und zweiten Achse liegt, und bei dem die ersten Hebemittel (78, 80) Lenkermittel umfassen, die das erste Stosselement (86) mit dem Kolben des ersten hydraulischen Zylinders (24) kuppelt, um die Bewegung des Kolbens des ersten Zylinders entlang der dritten Achse in eine Bewegung des ersten Stosselementes (86) parallel zur ersten Achse umzuwandeln.

6. Abdichtapparat nach Anspruch 3 oder 5, wenn abhängig vom Anspruch 3, bei dem der zweite und dritte hydraulische Zylinder (100) starr am Träger (74) befestigt sind, so dass die Kolben des zweiten und dritten hydraulischen Zylinders (100) sich bei hydraulischer Betätigung senkrecht zur ersten und zweiten Achse bewegen, und bei dem die zweiten Hebemittel (82) Lenkermittel für das Kuppeln des zweiten und dritten hydraulischen Zylinders (100) mit dem zweiten und dritten Stosselement (102) umfasst, und zwar für eine Umwandlungsbewegung des Kolbens des zweiten hydraulischen Zylinders (100) senkrecht zur ersten und zweiten Achse in einer Bewegung des zweiten Stosselementes (102) parallel zur zweiten Achse, und zum Umwandeln der Bewegung des Kolbens des dritten hydraulischen Zylinders 100 senkrecht zur ersten und zweiten Achse in einer Bewegung des dritten Stosselementes (102) parallel zur zweiten Achse.

FIG. 1

FIG. 2

FIG. 3

0 060 715

FIG. 4

FIG. 5

2

0 060 715

FIG. 6

FIG. 7

FIG 8